Europäisches Patentamt

European Patent Office

Office européen des brevets

(19)

(11) Veröffentlichungsnummer: **0 424 740 B1**

## EUROPÄISCHE PATENTSCHRIFT

(45) Veröffentlichungstag der Patentschrift: **27.04.94**

(51) Int. Cl.5: **B41M 5/124**, C09D 7/12

(21) Anmeldenummer: **90119478.7**

(22) Anmeldetag: **11.10.90**

(54) **Mikrokapseln und Abstandshalter enthaltende Druck- und Streichfarben.**

(30) Priorität: **21.10.89 DE 3935111**

(43) Veröffentlichungstag der Anmeldung:
**02.05.91 Patentblatt 91/18**

(45) Bekanntmachung des Hinweises auf die
Patenterteilung:
**27.04.94 Patentblatt 94/17**

(84) Benannte Vertragsstaaten:
**BE DE ES FR GB IT NL**

(56) Entgegenhaltungen:
DE-A- 2 249 798
FR-A- 2 510 480

CHEMICAL ABSTRACTS, vol. 94, no. 2, 12
Januar 81, Columbus, Ohio, USA; MITSUI TO-
ATSU CHEMICALS INC.: "Pressure-sensitive
copying materials" ref. no. 23016O

(73) Patentinhaber: **Follmann, Rainer, Dipl.-Chem.
Dr.
Blumenstrasse 22
D-32427 Minden(DE)**

(72) Erfinder: **Follmann, Heinrich
verstorben
(DE)**
Erfinder: **Hoffmann, Dietrich
Am Hag 6
W-6701 Roedersheim-Gronau(DE)**
Erfinder: **Sliwka, Wolfgang, Dr.
Diemstrasse 8
W-6940 Weinheim(DE)**

(74) Vertreter: **Beszédes, Stephan G., Dr.
Patentanwalt
Postfach 11 68
D-85201 Dachau (DE)**

EP 0 424 740 B1

## Beschreibung

Mikrokapseln, die zumeist auf Trägermaterialien wie z.B. Papierbahnen aufgebracht werden, geben ihren flüssigen Inhalt nach Zerstörung, z.B. durch Druckanwendung frei.

Bei kohlefreien Durchschreibesystemen, den sogenannten Reaktionsdurchschreibepapieren, enthalten die Mikrokapseln die Lösung eines oder mehrerer Farbbildner. Nach Zerstörung der Mikrokapseln durch gezielten Druck beim Schreiben läuft der Farbbildner an diesen Stellen aus und wird auf einer entsprechenden Entwicklerschicht zur Farbe und damit zur Durchschrift entwickelt. Enthalten die Mikrokapseln z.B. die Lösung eines Parfüms, so tritt nach Zerstörung der Kapseln durch Drücken bzw. Reiben sofort Duft auf.

Um nun eine ungewollte, vorzeitige Zerstörung von Mikrokapseln und damit die Freigabe des Inhaltes z.B. beim Transportieren, Lagern und bei der Handhabung zu verhindern, weisen die Mikrokapsel-haltigen Schichten zusätzlich sogenannte Abstandshalter auf. Als Abstandshalter werden feste Teilchen mit Abmessungen in der Größenordnung der Mikrokapseln und größer verwendet. Sie vermindern die vorzeitige Zerstörung der Kapseln bei flächigem Druck, der bei Durchschreibepapieren zu einer Verfärbung der Kopien und damit zu einer Verringerung des Kontrastes und der Lesbarkeit der Durchschrift führt. Bei Riechstoff enthaltenden Kapseln kommt es zu vorzeitigem Auftreten des Duftes. Allgemein spricht man dann von einer Verbesserung der Reibempfindlichkeit der Papiere durch die Abstandshalter. Zunehmende Mengen an Abstandshaltern reduzieren aber auch die Zerstörbarkeit der Kapseln und führen z.B. bei Durchschreibepapieren zu einer Abnahme der Intensität der Durchschrift. Die Wahl der richtigen Menge, der Größe und Form der Abstandshalter und ihre Bindung in der Mikrokapselhaltigen Schicht ist daher wesentlich für ein optimales Produkt.

Bei der Herstellung der Abstandshalter enthaltenden Mikrokapselschicht treten mehrere Probleme auf, die in der Praxis zu Schwierigkeiten führen. Durch die Form der Abstandshalter und deren Einfluß auf das rheologische Verhalten von damit hergestellten Streichmassen und Druckfarben ist die Verwendung auf wenige der existierenden Papierstreichanlagen und Druckverfahren beschränkt. Treten bei den Auftragswerken enge Spalte z.B. zwischen Walzen, Rakel und Papierbahn, bzw. Druckplatte und Papierbahn auf, so werden viele Mikrokapseln zerstört, was dann zu minderer Qualität der so erhaltenen Produkte führt. Entsprechendes tritt bei hohen Streich- und Druckgeschwindigkeiten auf. Absorbieren die Abstandshalter zudem Wasser, erfordern die aufgebrachten Schichten längere Trocknungszeiten, d.h. langsamere Streichgeschwindigkeit bzw. längere Trockenkanäle. Als Abstandshalter werden eine Reihe von Stoffen in der Praxis verwendet bzw. in der Literatur beschrieben. Einer der ältesten in der Technik eingesetzten Abstandshalter sind kurze Zellulosefasern, sog. Zelluloseschliff. Streichmassen, die Mikrokapseln und Zellulosefasern als Abstandshalter enthalten, werden in Form der wässrigen Streichfarbe auf Papierstreichanlagen mit Hilfe der Luftbürste auf Papier aufgetragen und getrocknet. Dieses Auftragsverfahren hat den Nachteil einer geringeren Streichgeschwindigkeit. Bei höheren Geschwindigkeiten müßte man z.B. Rakel- oder Gravurwalzenverfahren anwenden.

Bei Anwendung dieser Beschichtungsverfahren zeigte es sich, daß die Zellulosefasern, z.B. beim Rakelverfahren von der Rakel teilweise abgetrennt werden, so daß eine fehlerlose, gleichmäßige Beschichtung des Papiers nicht möglich ist und der Zelluloseschliff sich in der Streichfarbe anreichert. Aus diesem Grunde wurden andere Materialien gesucht, die als Abstandshalter besser geeignet sind.

In der DE-A-19 15 504 wird die Verwendung von Teilchen aus Stärke oder Stärkederivaten als Abstandshalter beschrieben, deren Größe das 1,5- bis 2fache der Größe der zu schützenden Mikrokapseln beträgt. Nach der DE-A-25 25 901 sind Stärkekörnchen mit Korngröße von 20 bis 75 $\mu$m aus verschiedenen Erbsenarten als Abstandshalter geeignet.

Nach der DE-C-870 837 sind wasserlösliche Proteinteilchen, bevorzugt Teilchen von Soja-Proteinen als Abstandshalter geeignet.

Aus der EP-A-6599 ist die Verwendung von Polyolefin-Pulver, gegebenenfalls zusammen mit Stärkekörnern, als Abstandshalter in mikroverkapselten Farbbildner enthaltenden Schichten bekannt.

In der US-A-4 280 718 wird die Verwendung von Körnern aus mit Harnstoff-Formaldehyd vernetzter Getreidestärke mit einem Durchmesser von 14 bis 20 $\mu$m als Abstandshalter beschrieben.

Gemäß der US-A-4 211 437 werden stiftförmige, mit Gelatine beschichtete Kaolinteilchen, deren Durchmesser 2 bis 12 mal größer ist als der der Farbbildner enthaltenden Mikrokapseln, als Abstandshalter beschrieben.

In der US-A-4 327 148 können Polyolefine, wie Polyethylen, Polypropylen oder Polystyrol sowie deren Copolymere und Mischungen davon, wobei die Polymeren einen Erweichungspunkt von mindestens 70°C haben, in Form wäßriger Dispersionen mit Teilchendurchmessern von 5 bis 30 $\mu$m, als Abstandshalter verwendet werden.

Nach der JP-A-092 591/1983 sind Teilchen aus Amylose-Einschlußverbindungen mit Durchmessern des 1,5- bis 10fachen des Mikrokapseldurchmessers als Abstandshalter geeignet.

Diese im Stand der Technik als Abstandshalter beschriebenen Teilchen sind praktisch isometrisch, nahezu kugelförmig und relativ hart. Bei ihrer Anwendung erzielt man kein so gutes Verhältnis von verbesserter Reibempfindlichkeit zu Durchschriftintensität wie bei der Anwendung von Zelluloseschliff. Nach den Angaben in der DE-A-35 12 565 wird vermutet, daß die Bindung der Teilchen auf dem Papier wegen ihrer Form und wegen ihrer geringen Affinität zum Bindemittel zu wünschen übrig läßt. D.h. diese Teilchen werden beim Reiben aus der Mikrokapseln tragenden Schicht gelöst und zerstören beim Rollen Mikrokapseln. Das führt bei den Durchschreibepapieren zur Verfärbung der für die Durchschrift vorgesehenen Seite.

Beim Herstellen von Beschichtungen mit Mikrokapseln, die flüssiges Kernmaterial wie Lösungen von Farbbildnern, Parfüms oder Aromaöle enthalten, mittels bekannter Druckverfahren in vollflächigem, bevorzugt aber teilflächigem Druck (Spotdruck), z.B. auf Papier, treten je nach dem Verfahren mehr oder minder große Schwierigkeiten auf und zwar auch dann, wenn man relativ langsame und umständliche Druckverfahren anwendet. Die Schwierigkeiten, die bei Siebdruck, Flexodruck, Tiefdruck und Offset-Druck auftreten, beruhen einmal auf der Größe der Mikrokapseln, der Viskosität der Druckfarben und der Rheologie der Druckfarben. Letztere wird in der Regel durch den notwendigen, im Verhältnis zum Gehalt an Kapseln relativ hohen Gehalt an Abstandshaltern verursacht. Zum anderen beruhen die oben genannten Schwierigkeiten auf den im Verhältnis zu den Kapseldurchmessern geringen Spalten der Auftragswalzen und den geringen Näpfchentiefen der Druckwalzen, der Rastergröße und dem teilweise sehr geringen Auftrag an Farbe beim Druckvorgang. Als Folge davon passieren die Druckfarben nur unvollständig die Spalten an den Walzen und bauen sich zunehmend vor den Spalten auf, wobei bereits Kapseln zerstört werden.

Die im Verhältnis relativ niedrige Konzentration an Mikrokapseln (ca. 20 Gew.-%) in der Druckfarbe reicht unter solchen Bedingungen nicht aus, daß in einem Druckauftrag die für eine gut lesbare Durchschrift erforderliche Kapselmenge aufgebracht wird. Hinzu kommt noch, daß wegen der ungünstigen Rheologie bzw. der hohen Viskosität der Druckfarbe kein vollständiger Übertrag der Druckfarbe z.B. aus den Tiefdrucknäpfchen erfolgt, was eine zusätzliche Verringerung des Auftrags an Kapseln nach sich zieht. Wegen des schlechten Verlaufs führen die Stege sichtbar zu nichtbedruckten Teilen der Oberfläche, d.h. die Drucklage ist schlecht, der Druck ist streifig. Es sind nicht überall Kapseln abgelegt, was zu unterbrochenem Schriftzug in der Durchschrift führt. Viele Kapseln sind zerstört. Die üblicherweise in den Druckfarben verwendeten organischen Lösungsmittel schränken den Umfang der zu verwendenden Mikrokapseln auf solche ein, deren Wandmaterial gegenüber diesen Lösungsmitteln, vor allem Alkoholen, beständig und dicht ist (vgl. EP-A-00 26 914).

Aus diesen Gründen ist die Zahl der Veröffentlichungen, in denen die Verarbeitung von Mikrokapseln speziell im Offsetdruck beschrieben wird, bisher gering und die praktische Anwendung des Offsetdrucks, so wünschenswert diese auch ist, auf diesem Gebiet bisher unbekannt.

So wird in der US-A-3 016 308 ein Verfahren beschrieben, nach dem Mikrokapseln z.B. durch Sprühtrocknung als freifließendes Pulver hergestellt werden können. Die Form des Pulvers ermöglicht es, die Kapseln wie bisher mit wäßrigen, insbesondere aber mit nicht wäßrigen, Bindemittel enthaltenden Formulierungen auf Oberflächen aufzubringen. Im letzteren Fall ist es dann auch möglich, Kapseln im Spotdruck, d.h. nur an den Stellen aufzubringen, an denen durchgeschrieben werden soll. Auf diese Weise sollen mit wasserfreien oder wasserarmen Fomulierungen verzugsfreie, ebene Papiere erhalten werden. Die Mikrokapseln werden zu diesem Zweck in Wachsschmelzen, Druckfarben und auch in eine Offsetdruckfarbe eingearbeitet und ohne Abstandshalter mit den entsprechenden bekannten Beschichtungs- oder Druckverfahren auf die Oberflächen aufgebracht.

In der EP-B-0 037 477 werden Durchschreibepapiere und Verfahren zu deren Herstellung sowie geeignete Offsetdruck- und Buchdruckfarben beansprucht. Die Mikrokapseln, die vor der Einarbeitung in die Farbe aus vorliegenden wäßrigen Dispersionen durch z.B. Sprühtrocknung als Pulver gewonnen werden, oder denen bei der Formulierung der Farbe das Wasser entzogen wird, können mit vielen möglichen Wandmaterialien hergestellt sein. Unter den zahlreichen genannten Materialien werden Melamin-Formaldehyd-Kondensate als Wandmaterialien nicht aufgeführt. Die nicht wäßrigen, im wesentlichen lösugsmittelfreien, auf Basis von Reaktionsharzen formulierten Farben können Abstandshalter wie Zellulosefaserpartikel oder Stärkekörner enthalten, die einen Durchmesser des 1,5- bis 2fachen des Durchmessers der verwendeten Mikrokapseln haben. In den Beispielen werden im Trocken-, Rollen- und Bogenoffsetdruck hergestellte Drucke mit Auftragsgewichten von 4,2 über 5,5 bis zu 9,0 $g/m^2$ ausgewiesen. Da im Offsetdruck in der Regel nicht mehr als ca. 2 $g/m^2$ je Auftrag erreicht werden und aus den Angaben in den Beispielen nur ein einmaliger Auftragsvorgang abgeleitet werden kann, ist die Durchführung der Versuche wohl nicht vollständig offenbart worden. Über eine vorzeitige Zerstörung von Mikrokapseln und die damit einhergehende Verfärbung der Durchschreibepapiere ist nichts gesagt.

Im Falle der Durchschreibepapiere kann man die Farbbildnerlösung, die beim Druckvorgang aus den zerstörten Kapseln ausläuft, durch Zugabe von z.B. Polyethylenoxid zum Strich neutralisieren, so daß keine Verfärbung eintritt. Solche Zusätze bedeuten jedoch einen Verlust an Durchschreibeleistung bzw. Intensität bei der zu erwartenden Durchschrift. Bei Kapseln mit Riechstoffinhalt führen die während des Druckens zerstörten Kapseln zu einer Geruchsbildung, d.h. zu einem Geruch des Papiers vor der Anwendung.

Über alles gesehen ist es daher insbesondere auf dem Gebiet des Offsetdrucks trotz gegenteiliger Darstellung im Stand der Technik wegen der hohen Viskosität der bisherigen Kapseln enthaltenden Druckfarben auch bei der Mitverwendung von Lösungsmitteln und wegen der begrenzten Auftragsdicke von 1-2 $\mu$m praktisch noch zu keinem Druckauftrag von Mikrokapseln zur Herstellung von z.B. Durchschreibepapieren gekommen.

Aufgabe der Erfindung war es, Streich- und Druckfarben, die Mikrokapseln und Abstandshalter enthalten, bereitzustellen, welche hohe Gehalte an Mikrokapseln aufweisen und die nach den üblichen Auftragsverfahren ohne Störungen und ohne vorzeitige Zerstörung von Mikrokapseln aufgebracht werden können.

Die Aufgabe wird mit Hilfe der Streich- und Druckfarben der Erfindung gelöst.

Gegenstand der Erfindung sind Mikrokapseln und Abstandshalter enthaltende Streich- und Druckfarben, die dadurch gekennzeichnet sind, daß diese als Abstandshalter kugelförmige, harte mono- oder polydisperse Teilchen enthalten, die aus Melamin-Formaldehyd-Kondensationsprodukten bestehen und die Teilchengrößen von 2 bis 50 $\mu$m aufweisen.

Die erfindungsgemäß angewendeten kugelförmigen harten mono- oder polydispersen, praktisch nicht quellbaren Teilchen werden durch Kondensation von mit $C_1$-$C_4$-Alkanolen partiell veretherten Melamin-Formaldehyd-Vorkondensaten (die in Wasser in jedem Verhältnis klar mischbar sind und die ein Verhältnis von Melamin zu Formaldehyd von 1:3 bis 1:6 aufweisen) in einer wäßrigen Lösung eines in Wasser löslichen Polymeren (das stark saure Gruppen, vorzugsweise Sulfonsäuregruppen trägt und das einen K-Wert von 100 bis 160 oder eine Viskosität von 200 bis 3000 mPa$\bullet$s bei einem Schergefälle von 489 s$^{-1}$ [gemessen bei 25°C in 20 gew.-%iger wäßriger Lösung bei pH = 7] aufweist) bei pH 3 bis 6 und 20 bis 100°C in Form einer Dispersion erhalten. Nach dem Neutralisieren können die Teilchen in Form der Dispersion direkt verwendet werden oder durch Sprühtrocknen in Form von Pulvern isoliert und in Form des Pulvers zur Herstellung der Mikrokapseln enthaltenden Druck- und Streichfarben verwendet werden.

Die Herstellung der kugelförmigen, harten mono- oder oligodispersen, praktisch nicht quellbaren Teilchen wird in der nicht vorveröffentlichten DE-A-39 29 052 (Patentanmeldung P 39 29 052.2) erläutert und beschrieben. Wie darin ausgeführt wird, erhält man kugelförmige, harte Teilchen aus Melamin-Formaldehyd-Harzen, deren Durchmesser den Bereich von 0,1 bis 100 $\mu$m und größer überstreichen. Durch entsprechende Maßnahmen gelingt es, Teilchen mit mono-, oligo- oder polydispersen Teilchendurchmesserverteilungen herzustellen. Man erhält wäßrige Dispersionen mit Feststoffgehalten von 1 bis 40 Gew.-%, bevorzugt von 8 bis 30 Gew.-%. Die anfallenden Dispersionen sind sehr stabil und niederviskos. Sie können zu Pulvern getrocknet werden. Letztere sind zur Herstellung sehr niederviskoser wäßriger oder nichtwäßriger Dispersionen geeignet.

Für das Verfahren zur Herstellung der kugelförmigen, harten Teilchen ist wesentlich:

1) daß ein Melamin-Formaldehyd-Vorkondensat als Ausgangsstoff verwendet wird, das mit Wasser in jedem Verhältnis ohne Trübung mischbar ist. Diese Vorkondensate werden durch Kondensation von Melamin mit Formaldehyd im Molverhältnis 1 : 3 bis 1 : 6 und folgender partieller Veretherung mit $C_1$-$C_4$-Alkanolen, vorzugsweise Methanol erhalten und

2) daß die Bildung der Teilchen in der Lösung eines klar gelösten, stark saure Gruppen, vorzugsweise Sulfonsäuregruppen tragenden Polymeren erfolgt. Die Konzentration des gelösten Polymeren beträgt, bezogen auf die Lösung aus dem Polymeren und dem Vorkondensat, 1 bis 10, vorzugsweise 2 bis 5 Gew.% an den stark saure Gruppen enthaltenden Polymeren.

Die Polymeren müssen einen K-Wert nach Fikentscher von 100 bis 160 (gemessen in wäßriger Lösung) oder eine Viskosität von 200 bis 3000 mPa$\bullet$s bei einem Schergefälle von 489 s$^{-1}$ (gemessen bei 25°C in 20 %iger wäßriger Lösung bei pH 7,0) aufweisen. Bevorzugt sind Polymere mit einem K-Wert von 100 bis 140 oder deren Viskosität 400 bis 2000 mPa$\bullet$s beträgt. Dabei wurde gefunden: je höher das Molekulargewicht der Polymeren, um so kleiner werden bei dem Verfahren die Teilchen. Als wasserlösliche stark saure Gruppen tragende Polymere kommen vor allem die Sulfonsäuregruppen tragenden Polymeren in Betracht, z.B. Polymerisate des Sulfoethyl(meth)acrylats, des Sulfopropyl(meth)acrylats, der Vinylsulfonsäure, der Maleinimid-N-ethansulfonsäure, der 2-Acrylamido-2-methylpropansulfonsäure und zwar sowohl in Form der Homopolymerisate als auch in Form der Copolymerisate. Die Polymeren liegen in Form der freien Säure oder vorzugsweise in Form der Alkalimetallsalze oder von Salzen tertiärer Amine vor. Als Sulfonsäuregruppen tragende Polymere kommen außerdem Copolymere in Betracht, die aus den genannten Sulfogruppen tragenden Monomeren und $C_1$-$C_3$-Alkylacrylaten, Hydroxy-$C_2$-$C_4$-alkylacrylaten wie Methyl-, Ethyl-, n- oder i-Propylacrylat, Hydroxypropylacrylat und/oder N-Vinylpyrrolidon, Acrylnitril, Acrylsäure, aufgebaut sind. Im Falle der Acrylate beträgt deren Anteil am Copolymerisat maximal 35 Gew.-%. Im Falle der Mitverwendung von Hydroxyalkylacrylaten, bzw. von Acrylsäure und oder Acrylnitril sollte deren Anteil nicht größer als 10 Gew.-%, bzw. 35 Gew.-%, bezogen auf die Summe der Comonomeren, sein. Bei Copolymeren mit N-Vinylpyrrolidon liegt der Anteil an den Sulfonsäuregruppen tragenden Monomeren bei mindestens 5, vorzugsweise bei 30 Gew.-% und darüber (bezogen auf die Summe der Comonomeren). Von den Copolymerisaten sind solche bevorzugt, die 2-Acrylamido-2-methyl-propansulfonsäure als Sulfonsäuregruppen tragendes Comonomere enthalten. Als Polymere sind die der 2-Acrylamido-2-methyl-propansulfonsäurebesonders bevorzugt, da in Lösungen dieses Polymeren besonders niedrig viskose Dispersionen und Teilchen mit besonders guten Eigenschaften gebildet werden.

Das Verhältnis Melamin-Formaldehydvorkondensat zu dem wasserlöslichen, saure Gruppen tragenden Polymeren beträgt 1 : 0,05 bis 1 : 0,7, bevorzugt 1 : 0,1 bis 1 : 0,4 Gew.-Tl., bezogen auf den Feststoffgehalt.

Durch Anwendung entsprechend konzentrierter Lösungen des Melamin-Formaldehyd-Vorkondensates können Dispersionen mit Feststoffgehalten von 1 bis 40 Gew.-%, vorzugsweise von 8 bis 30 Gew.-%, hergestellt werden. Dabei wurde gefunden, daß mit zunehmender Konzentration des Vorkondensates in der Regel der Durchmesser der Teilchen ansteigt.

Die Kondensation des Vorkondensates erfolgt bei Temperaturen von 20 bis 100 °C, bevorzugt bei 25 bis 80 °C. Die Kondensation kann bei konstanter Temperatur aber auch bei variabler Temperatur, z.B. bei steigender Temperatur erfolgen.

Die Kondensation des Melamin-Formaldehyd-Vorkondensates erfolgt bei pH 3,0 bis 6,0, bevorzugt bei pH 3,5 bis 5,0. Der pH-Wert in der wäßrigen Lösung kann mit verschiedenen Säuren eingestellt werden, z.B. mit Salzsäure, Schwefelsäure, Phosphorsäure, p-Toluolsulfonsäure, Carbonsäuren wie Ameisensäure, Essigsäure oder Propionsäure. Bei Verwendung der Carbonsäuren wurde gefunden, daß die Kondensation bei gleichem pH-Wert von der Ameisensäure zur Propionsäure schneller erfolgt. Gleichzeitig nimmt der Durchmesser der Teilchen ab.

Die Kondensation bis zum Aufbrauch des in Lösung enthaltenen Melamin-Formaldehyd-Vorkondensates erfolgt mit zunehmendem Teilchendurchmesser und/oder steigendem pH-Wert deutlich langsamer. Das Ende der Kondensation läßt sich an einer Probe durch Ansäuern auf pH-Werte unter 3,5 und Weiterkondensation prüfen. Dispersionen, die noch etwa 10 Gew.% und mehr an dem Vorkondensat enthalten, zeigen dann eine zweite Fraktion sehr feiner im wesentlichen monodisperser Teilchen. Bei geringeren Gehalten hat es sich als vorteilhaft erwiesen, zur Beschleunigung der Restkondensation den pH-Wert auf bis zu 2 zustellen und/oder die Temperatur auf 60 bis 100 °C anzuheben.

Im pH-Bereich von 3,5 bis ca. 4,5 erhält man Teilchen mit monodisperser Verteilung des Durchmessers, wobei der Teilchendurchmesser mit steigendem pH-Wert zunimmt. Bei der Kondensation bei pH-Werten >4,5 erhält man Teilchen mit oligodisperser Durchmesserverteilung. Höhere Temperaturen zeigen Tendenz zu kleineren und mehr polydispers verteilten Teilchendurchmessern und umgekehrt. Da auch das in üblichem Wasser enthaltene Salz die Teilchengröße der bei der Kondensation entstehenden Teilchen beeinflußt, erfolgt die Kondensation zweckmäßigerweise in Lösungen mit vollentsalztem Wasser.

Fügt man einer solchen Lösung z.B. 0,1 Gew.-% und mehr Salz hinzu, so erhält man größere Teilchen. Gleichzeitig erhält man unter Bedingungen, bei denen sonst Teilchen mit monodisperser Durchmesserverteilung entstehen, im zunehmendem Maße Teilchen mit oligodisperser Verteilung. Der durch das Salz hervorgerufene Effekt wird mit zunehmender Kettenlänge der Carbonsäure geringer. Auf diese Weise gelingt es mit Propionsäure auch in Gegenwart von bis zu 0,1 Gew.-% Salz, Teilchen mit monodispersen Durchmesserverteilungen zu erhalten.

Durch Variation der oben genannten Einflußgrößen ist es möglich, Dispersionen von Teilchen mit dem gewünschten Durchmesser, Durchmesserverteilungen und Feststoffgehalten herzustellen.

Der bei der Kondensation der Melamin-Formaldehyd-Vorkondensate freiwerdende Formaldehyd kann gebunden werden, z.B. in bekannter Weise mit Ammoniak bei pH-Werten oberhalb 7 bis 8 oder z.B. mit Harnstoff, Ethylenharnstoff.

Besonders vorteilhaft ist bei den nach dem Verfahren der Erfindung erhaltenen Dispersionen, den freien Formaldehyd durch Kondensation mit Melamin zu binden.

Hierzu wird die noch von der Kondensation her saure Dispersion der Teilchen bei 60 bis 90 °C, bevorzugt bei 70 bis 85 °C, bei pH 4,0 bis 5,0 unter Rühren innerhalb 1 bis 2 Stunden mit einer Aufschlämmung von Melamin in Wasser (Verhältnis Melamin zu Wasser 1 : 2 bis 1 : 4) kontinuierlich versetzt, wobei man die Kondensation bis zum Verbrauch des freien Formaldehyds fortführt.

Bei der Kondensation der Melamin-Formaldehyd-Vorkondensate zur Dispersion ist gleichmäßiges Mischen wesentlich. Das Durchmischen sollte nicht turbulent sein und es sollten dabei auch keine Gasblasen entstehen oder in die wäßrige Phase eingerührt werden, da durch solche Gasblasen Agglomerate der feinen Teilchen oder größere Teilchen gebildet werden können.

Die nach dem Verfahren erhaltenen Dispersionen können getrocknet werden, z.B. in einem Sprühtrockner. Die dabei erhaltenen Pulver sind frei von Agglomeraten und lassen sich in Wasser und/oder Lösungsmittel enthaltenden Systemen einfach einarbeiten. Für die Isolierung durch Sprühtrocknung sind vor allem die vollständig von Vorkondensat befreiten Dispersionen geeignet.

Erfindungsgemäß werden kugelförmige, harte Teilchen aus Melamin-Formaldehyd-Kondensationsprodukten mit Teilchengrößen von 2 bis 50 $\mu$m als Abstandshalter in Mikrokapseln enthaltenden Druck- und Streichfarben verwendet.

Die Mikrokapseln enthaltenden Streich- und Druckfarben der Erfindung sind auch bei höheren Gehalten an Mikrokapseln niedrigviskos. Diese Farben können wäßrig, wäßrig-organisch oder nichtwäßrig sein und sowohl nach allen Varianten der Streichverfahren als auch nach den bekannten Druckverfahren aufgebracht werden.

Die neuen Streich- und Druckfarben geben praktisch keinen Rückstau und/oder keine Ansammlungen von Mikrokapseln und Abstandshalter vor den Auftragswalzen des Streich- oder Druckwerks. Die Farben liefern beim Streichen einen hervorragenden Verlauf und beim Druck eine hervorragende Farblage nach dem Druckauftrag. Letzteres hat sich besonders beim Offsetdruck gezeigt, bei dem es erstmals möglich war, Parfüm- und/oder Duftstoff enthaltende Mikrokapseln in Anwesenheit der erfindungsgemäßen Teilchen als Abstandshalter zu drucken. Dabei tritt keine merkliche Zerstörung von Kapseln ein, so daß der beschichtete Träger keinen Geruch aufweist. Der Duft tritt erst nach dem Zerstören von Mikrokapseln durch entsprechendes Reiben auf. Polydisperse Teilchen haben sich dabei besonders als Abstandshalter bewährt.

Der Auftrag von Farbstoffvorläufer-enthaltenden Mikrokapseln im Offsetdruck ist damit im Hinblick auf vorzeitige Zerstörung von Mikrokapseln deutlich verbessert und erstmals sinnvoll einsetzbar. Die im allgemeinen in einem Druckvorgang erzielbare Auftragsmenge von 1 - 2 g pro m$^2$ ist jedoch für eine gut kontrastierende, d.h. gut lesbare Durchschrift zu gering. In bestimmten Anwendungsgebieten, wie bei Sicherheitsdrucken, wo eine Kodierung oder Markierung oder dergleichen Kennzeichnung eines Wertdrucks, z.B. bei Tickets, gewünscht ist, ist ein einmaliger Druckvorgang voll ausreichend. Ein Mehrfachdruck ist technisch ohne weiteres durchführbar und führt entsprechend zu höheren Kapselaufträgen.

Die kugeligen Melamin-Formaldehyd-Harzteilchen absorbieren praktisch kein Wasser, Öl oder Lösungsmittel und gelieren oder verkleistern auch nicht in der Weise, wie es die meisten anderen, als Abstandshalter bisher verwendeten Partikeln, wie Zelluloseschliff, vor allem aber Stärkekörner tun. Dadurch wurde die Trocknung, die Glätte und die Drucklage der Mikrokapseln enthaltenden Striche bzw. Drucke beim Trocknen erheblichen Störungen unterworfen. Das macht sich besonders bemerkbar, wenn die Kapselstriche in Streichanlagen mit hoher Laufgeschwindigkeit und/oder mit kurzem Trockenkanal bei Temperaturen bis 350 °C getrocknet werden sollen. Demgegenüber können z.B. Streichfarben, die mit den erfindungsgemäßen, kugeligen Mikroteilchen als Abstandshalter angesetzt sind, mit dem z.B. Revers-Gravur-Coater sehr gleichmäßig, schnell und sicher dosiert auf Papier beschichtet und getrocknet werden. Dabei werden nur ganz vereinzelt Mikrokapseln zerstört.

Aufgrund ihres chemischen Aufbaus haben die Mikroteilchen aus Melamin-Formaldehyd-Harz eine ausgezeichnete Affinität zu den gebräuchlichen Bindemitteln, so daß sie im Kapselstrich fest verankert sind.

Ganz besonders bevorzugt sind solche erfindungsgemäßen Druck- und Streichfarben, die Mikrokapseln enthalten, die nach dem Verfahren der EP-B-26 914 hergestellt wurden. Mit diesen Mikrokapseln erhält man Streich- und Druckfarben, z.B. Offsetdruckfarben mit niedrigen Viskositäten. Hierdurch wird erstmals auch die Anwendung des Offset-Druckverfahrens für Mikrokapseln enthaltende Farben zur Herstellung von Mikrokapseln enthaltenden Drucken mit einem größeren Auftrag an Kapseln möglich. Mit Hilfe der erfindungsgemäßen Druckfarben gelingt es, Mikrokapseln mit Hilfe von Druckverfahren aufzutragen, ohne daß eine merkliche Zerstörung von Kapseln erfolgt. Dies kann z.B. beim Druck von Duftstoff enthaltenden Kapseln am fehlenden Geruch während des Druckens im Druckwerk festgestellt werden. Das bedruckte Papier weist keinen Geruch auf. Durch Reiben auf der bedruckten Stelle tritt sofort der Duft auf.

Die Druck- und Streichfarben enthalten 10 bis 50, vorzugsweise 15 bis 35 Gew.% an Mikrokapseln und 5 bis 20, vorzugsweise 8 bis 15 Gew.% an kugelförmigen, harten mono- oder polydispersen Teilchen aus Melamin-Formaldehyd-Kondensationsprodukten. Das Gewichtsverhältnis der kugelförmigen harten mono- oder polydispersen Teilchen bezogen auf trockene Mikrokapseln, beträgt 10 bis 80, vorzugsweise 10 bis 40 Gew.%. Die Streich- und Druckfarben der Erfindung enthalten neben den Mikrokapseln und den mono- oder oligodispersen kugelförmigen harten Teilchen als Abstandshalter weitere in solchen Farben übliche Bestandteile. Dazu gehören beispielsweise bisher als Abstandshalter verwendete Stoffe, wie Stärke und/oder Cellulosemehl. Gut verarbeitbare Druck- und Streichfarben sind z.B. dadurch erhältlich, daß man bis zu 60, vorzugsweise bis zu 50 Gew.% der kugelförmigen harten mono- oder polydispersen Teilchen der Druck- und Streichfarben durch Stärke, Cellulosemehl oder Mischungen aus Stärke und Cellulosemehl ersetzt. Die Druck- und Streichfarben enthalten außerdem Bindemittel, wie Polymerdispersionen, natürliche oder synthetische Harze, Mittel, die den Verlauf der Streichfarbe verbessern, und gegebenenfalls lösliche oder unlösliche Farbmittel zum Färben der Beschichtung und gegebenenfalls Lösemittel für die Bindemittel und organische Flüssigkeiten zur Einstellung der Viskosität. Der Bindemittelgehalt liegt üblicherweise in dem Bereich von etwa 2 bis 10 Gew.%, bezogen auf die Druck- und Streichfarben, während der Gehalt an Wasser und/oder Lösemittel im allgemeinen ca. 30 bis 70 Gew.% beträgt.

Die Streichfarben werden in gleicher Weise wie die Farben des Standes der Technik durch Mischen der Komponenten in wäßrigem Medium hergestellt.

Die Druckfarben werden durch Mischen der Komponenten hergestellt. Im Falle der Mitverwendung von Pigmenten, werden zweckmäßig vordispergierte oder leicht dispergierbare Pigmente verwendet, da ein Anreiben der Farbe auf dem Dreiwalzenstuhl in Gegenwart der Mikrokapseln zur Zerstörung eines mehr oder minder großen Anteils der Kapseln führt. Falls ein Anreiben des Pigmentes erforderlich ist, werden Mikrokapseln und die erfindungsgemäß zu verwendenden Abstandshalter der angeriebenen Farbe zugesetzt und homogen eingerührt. In diesen Fällen macht sich der durch die Mikrokapseln und die Abstandshalter verursachte geringe Einfluß auf die Viskosität positiv bemerkbar.

Die Durchmesser der Mikroteilchen und die der Mikrokapseln werden in verdünnter Dispersion unter dem Mikroskop bestimmt. Zur genaueren Ausmessung kann z.B. der Coulter-Counter verwendet werden (nähere Einzelheiten hierzu finden sich z.B. in der DE-A 39 29 052).

Mikrokapseln besitzen von der Herstellung her immer eine gewisse Verteilungsbreite im Durchmesser. Es wird deshalb im Folgenden der Bereich der mittleren Durchmesser angegeben. Bei den Mikroteilchen können sowohl monodisperse als auch oligodisperse bzw. polydisperse Verteilungen der Durchmesser erzeugt werden. Bei monodispersen Mikroteilchen ist der Durchmesser klar definiert. Bei den oligodispersen bzw. polydispersen Mikroteilchen werden die Extreme der häufigsten Teilchen bestimmt und angegeben.

Die Erfindung soll durch die folgenden Beispiele zusätzlich erläutert werden.

Die Teile sind Gewichtsteile. Die Prozente sind Gewichtsprozente. Die K-Werte wurden nach H. Fikentscher, Cellulosechemie, Band 13, 58-64 und 71-74 (1932), bestimmt. Dabei bedeutet K = $k \cdot 10^3$. Die Messungen wurden an wäßrigen Lösungen bei pH 7,0, einer Temperatur von 25°C und einer Polymerkonzentration von 1 Gew.% durchgeführt.

Herstellung von kugelförmigen harten Teilchen aus Melamin-Formaldehyd-Kondensationsprodukten

Beispiel A

A.1 Herstellung der Dispersion der kugelförmigen harten Teilchen

In einem zylindrischen 2 l Glaskolben mit Propellerrührer wurden 1020 g vollentsalztes Wasser, 160 g einer 20 %igen, wäßrigen Lösung von Poly-2-acrylamido-2-methylpropansulfonsäure/Natriumsalz (Viskosität: 407 mPa·s, K-Wert: 106,6) und 4,73 g einer 10 %igen Ameisensäure durch-mischt und im Wasserbad auf 60°C aufgeheizt. Dann wurden unter Rühren (500 Upm) 172 g einer klaren, 70 % wäßrigen Lösung eines partiell methylierten Vorkondensates (aus 1 mol Melamin und 5,25 mol Formaldehyd, enthält 2,3 $CH_3O$-Gruppenpro Melaminmolekül) auf einmal zugegeben. Die Lösung hatte unmittelbar nach der Zugabe einen pH-Wert von 4,53. Die klare, wäßrige Lösung wurde bei 60°C gerührt. Nach 17 min trübte sich die Lösung durch Ausfallen der Kondensatteilchen. Die gebildete Suspension mit der Melaminharzausfällung wurde 2 h bei 60°C weitergerührt, dann in 1,5 h die Temperatur auf 80°C erhöht und bei dieser Temperatur zu Ende kondensiert. Dauer: insgesamt 5 h Die Trübung näherte sich dabei asymptotisch dem Endwert. Die Suspension mit einem pH-Wert von 5,0 wurde mit Triethanolamin auf pH = 7,5 gestellt (Verbrauch: 2,2 g) und abgekühlt.

Unter dem Mikroskop erkennt man kugelige Einzelteilchen mit unterschiedlichen Durchmessern im Bereich von 2 bis 10 $\mu$m. Mit dem Coulter-Counter wurde als häufigster Teilchendurchmesser $\emptyset_n = 7,63 \ \mu$m und $\emptyset_{Vol} = 9,31 \ \mu$m bestimmt. Verteilungsbreite: $Q_{n \ 50} = 0,595$; $Q_{Vol \ 50} = 0,50$; $Q_{Vol \ 90} = 1,31 \ \mu$m. Die Durchmesserverteilungskurve zeigte einen weiteren Peak bei $\emptyset_n = 8,81 \ \mu$m; d.h. die Teilchen hatten eine bidisperse bzw. bimodale Verteilung. Nach der Kurve hatten 50 % der Teilchen einen Durchmesser von $Q_n = 5$ bis 10 $\mu$m, 90 % der Teilchen bis 14 $\mu$m, die restlichen

10 % einen Durchmesser von 14 bis 20 $\mu$m.

A.2 Isolierung der Teilchen.

Die nach A.1 erhaltene Dispersion wurde in einem Laborsprühtrockner mit Zweistoffdüse bei einer Eingangstemperatur von 130°C verdüst. Die Dispersion wurde so zudosiert, daß am Trocknerausgang hinter dem Zyklon eine Temperatur von 65°C eingehalten wurde. Es wurde ein Pulver mit einem Feststoffgehalt von 98,5 % erhalten. Das Pulver war sehr locker, fast staubig. Der gläserne Sprüh- bzw. Trockenraum des Sprühtrockners zeigte keinen festhaftenden Belag. Eine Probe des Pulvers, in Wasser mit einem Schnellrührer dispergiert, liefert unter dem Mikroskop Einzelkugeln der gleichen Größe und Verteilung wie die der Ausgangsdispersion.

Beispiel B

In einem zylindrischen 2 l Glasgefäß mit Blattrührer, der sich mit 25 Upm drehte, wurden 1020 g entsalztes Wasser, mit 160 g einer 20 %igen wäßrigen Lösung eines Poly-2-acrylamido-2-methylpropansulfonsäure/Natriumsalzes (K-Wert = 127,4, Viskosität 827 mPa•s) und 135 g einer 70 %igen, wäßrigen Lösung eines mit Wasser ohne Trübung unendlich verdünnbaren Vorkondensates aus 1 mol Melamin und 2,9 mol Formaldehyd, das partiell mit 2,4 $CH_3$O-Gruppen je Melaminmolekül verethert ist, gemischt und auf 38°C aufgeheizt. Dann wurden 12 g einer 10 %igen wäßrigen Ameisensäurelösung zugegeben. Es stellte sich ein pH-Wert von 4,80 ein und die Kondensation der noch klaren Lösung setzte ein. Nach 30 min trübte sich die Lösung. Die Suspension wurde bei 38 bis 40°C auskondensiert. Die erhaltene Dispersion wurde mit Triethanolamin neutralisiert und abgekühlt. Feststoffgehalt: 13,7 %. Mit dem Mikroskop erkennt man gleichgroße, kugelige Einzelteilchen von etwa 6 bis 7 $\mu$m.

Die Messung mit dem Coulter-Counter ergab einen häufigsten Teilchendurchmesser von $\emptyset_n$ = 10,42 $\mu$m bzw. $\emptyset_{Vol}$ = 10,66 $\mu$m. Daneben wurde noch ein kleinerer Peak bei $\emptyset_n$ = 7,4 $\mu$m bzw. $\emptyset_{Vol}$ = 7,67 $\mu$m und ein noch kleinerer Peak bei $\emptyset_n$ = 5,07 $\mu$m gefunden. Es lag also eine oligodisperse Verteilung vor. Die Verteilung der Durchmesser wurde zu $Q_{n\ 50}$ = 0,184 bzw. $Q_{Vol\ 50}$ = 0,257 bestimmt. Die Dispersion wurde analog Beispiel A.2 durch Sprühtrocknung isoliert.

Beispiel C

Es wurde wie in Beispiel A.1 gearbeitet. Im Rührgefäß wurden 1270 g voll entsalztes Wasser, 200 g der wäßrigen Lösung aus Poly-2-acrylamido-2-methylpropansulfonsäure/Natriumsalz und 340 g der Lösung des partiell methylierten Vorkondensates aus Melamin und Formaldehyd vorgelegt, das Gemisch mit 800 Upm gemischt und auf 44°C aufgeheizt. Dann wurde das Gemisch mit 6 %iger Ameisensäure auf pH 4,2 gestellt. Nach und nach wurde weitere Ameisensäure zugegeben, so daß der pH-Wert über 2 h bei 4,2 gehalten wurde. Insgesamt wurden 120 g 6 %ige Ameisensäure benötigt. Danach wurde die Temperatur der Mischung von 44°C innerhalb einer halben Stunde auf 80°C erhöht und 1,5 Std. bei 80°C gehalten. Die Dispersion war danach auskondensiert. Nach dem Abkühlen wurde mit 10 %iger Natronlauge auf pH = 7,8 gestellt. Unter dem Mikroskop betrachtet, besteht die Dispersion aus gleichgroßen, kugeligen Einzelteilchen mit einem mittleren Durchmesser von 11 $\mu$m. Die Dispersion wurde im Sprühtrockner bei einer Eingangstemperatur von 125°C und einer Ausgangstemperatur von 65°C getrocknet. Dabei werden die Mikroteilchen als staubendes Pulver erhalten.

Beispiel 1

In einem 2 l-Mischgefäß aus Edelstahl wurden mittels eines Propellerrührwerks 980 g Offsetfirnis (enthält 37 % eines phenolmodifizierten Kolophoniumharzes, 21 % Lackleinöl, 32 % Mineralöl und 10 % Alkydharz), 280 g sprühgetrocknete, agglomeratfreie Mikrokapseln (hergestellt nach EP-B 26 914) die eine 15%ige Lösung aus Fichtennadelextrakt in Weißöl enthalten und einen mittleren Kapseldurchmesser von $\emptyset$ = 5 $\mu$m bis $\emptyset$ = 7 $\mu$m besitzen, 140 g pulverförmige harte Teilchen, die eine polydisperse Verteilung der mittleren Durchmesser von 2 $\mu$m bis 10 $\mu$m besitzen und keine Agglomerate enthalten und nach Beispiel A erhalten wurden, und 28 g aromatenfreies Mineralöl mittlerer Viskosität 0,5 h innig gemischt. Die erhaltene Offset-Druckfarbe war mit Hilfe des Mineralöls so eingestellt, daß bei 25°C eine mittlere Viskosität von 100 Pas erreicht wurde.

Die Druckfarbe wurde in einem Offsetdruckwerk der Fa. Heidelberger Druckmaschinen AG gedruckt. Der Auftrag nach der Trocknung betrug 1,2 g/m². Der Druck war glatt und rißfrei und roch nicht nach Fichtennadeln. Das gleiche galt auch vom Druckwerk. Wurde die bedruckte Papierfläche z.B. mit der Fingerspitze auf glatter Unterlage mit kräftigem Druck gerieben, so trat sofort ein intensiver Geruch nach dem Fichtennadelöl auf.

Vergleichsbeispiel 1

Die Farbe wurde wie in Beispiel 1 hergestellt, jedoch wurden die polydispersen harten Teilchen durch 140 g einer Kartoffelstärke mit einem mittle-

ren Durchmesser von 30 μm ersetzt. Die erhaltene Druckfarbe hatte eine Viskosität von 120 Pas. Beim Druckvorgang separierten sich die Stärkekörner auf den Verreibewalzen. Der Druck begann zu riechen, da Kapseln zerstört wurden.

Vergleichsbeispiel 2

Es wurde eine Farbe wie in Beispiel 1 hergestellt, jedoch ohne Zusatz der polydispersen harten Teilchen.

Die Farbe hatte eine Viskosität von 50 Pas. Beim Arbeiten des Druckwerks begann nach kurzer Zeit die Farbe nach Tannenduft zu riechen. Der Druck roch ebenfalls deutlich nach Tannenduft, d.h. im Druckwerk bzw. beim Bedrucken wurde ein erheblicher Anteil der Kapseln zerstört.

Beispiel 2

Es wurde eine Tiefdruckfarbe hergestellt:
884 g Ethanol,
91 g Polyvinylbutyral,
39 g Kupferphthalocyaninpigment (leicht dispergierbar),
390 g agglomeratfreies Mikrokapselpulver
(mittlerer Teilchendurchmesser: 5 μm;
Kern: eine Lösung von 2 % Rosenöl in Weißöl)
130 g pulverförmige harte oligodisperse Teilchen
(mittlerer Durchmesser im Bereich von 4 μm bis 6 μm, keine Agglomerate, erhalten nach Beispiel B) wurden gemischt und mit einem Tiefdruckwerk der Fa. Giebeler bei einer Rastertiefe von 30 μm auf ein Papier gedruckt. Die Viskosität der Druckfarbe betrug 200 mPa•s. Nach der Trocknung im Warmluftstrom (Dauer: ca. 2 Min.) wurde ein fehlerloser, intensiv blauer Druck mit einem Auftragsgewicht von 5,0 g/m$^2$, der praktisch nicht nach Rosenöl riecht, erhalten. Das arbeitende Druckwerk roch auch nach einstündigem Betrieb nicht nach Rosenöl.

Beim Reiben der bedruckten Papieroberfläche trat sofort ein intensiver Geruch nach Rosenöl auf.

Beispiel 3

Es wurde eine mikrokapselhaltige Papierstreichmasse aus:
8,25 Teilen einer 40%igen Mikrokapseldispersion
(mittlerer Ø der Mikrokapsel 5,5 μm),
1,3 Teilen pulverförmige harte monodisperse Teilchen
(mittlerer Durchmesser 10 μm; erhalten nach Beispiel C)
11,0 Teilen Wasser und
1,3 Teilen einer 50%igen Polymer-Dispersion als Bindemittel
hergestellt.

Die Papierstreichmasse wurde in einem Propeller-Rührwerk homogenisiert. Die Viskosität der Papierstreichmasse wurde zu 250 mPas gemessen.

Die so erhaltene Papierstreichmasse wurde auf einer Papierstreichanlage mit einem Rakel und einer nachgeschalteten Luftstreichbürste bei einer Papierbahngeschwindigkeit von 400 m/min auf ein Papier von 50 g/m$^2$ Gewicht aufgebracht und im Trockenkanal bei einer Lufttemperatur von 180°C getrocknet.

Es wurde ein sehr gleichmäßig beschichtetes, trockenes mit Mikrokapseln beschichtetes Papier mit einem Beschichtungsgewicht von 5,5 g/m$^2$ erhalten.

Bei der Prüfung im Formularsatz wurde eine sehr gut lesbare Durchschrift erhalten. Beim Besprühen der Mikrokapseln tragenden Papierseite mit einer Entwicklerflüssigkeit wurden nur ganz vereinzelt kleine farbige Pünktchen gefunden; d.h. es wurden nur einige wenige Mikrokapseln beim Auftrag und der Trocknung zerstört.

Vergleichsbeispiel 3

Es wurde wie Beispiel 3 gearbeitet, jedoch wurden anstelle der monodispersen harten Teilchen 1,3 Teile Zelluloseschliff mit Faserlängen von bis zu 30 μm als Abstandshalter verwendet. Die erhaltene Streichfarbe hatte eine Viskosität von 300 mPas.

Die Farbe wurde auf der im Beispiel 3 verwendeten Streichanlage gestrichen. Trotz der Verminderung der Papierbahngeschwindigkeit auf 350 m/min wurden feuchtes und darüber hinaus ungleichmäßig beschichtetes Papier erhalten. Die Schicht wies knotige Stellen im Strich auf, die von Zelluloseschliffansammlungen herrühren. Beim Besprühen des getrockneten Papiers mit der Entwicklerflüssigkeit trat eine starke Färbung des Papiers ein. D.h. beim Auftrag wurde ein großer Teil der Mikrokapseln zerstört. Das erhaltene beschichtete Papier ist unbrauchbar.

Vergleichsbeispiel 4

Es wurde wie im Beispiel 3 gearbeitet, jedoch wurden anstelle der monodispersen harten Teilchen 1,3 Teile einer kalibrierten Stärke (20 bis 30 μm Ø) verwendet. Die erhaltene Streichfarbe hatte eine Viskosität von 250 mPas.

Die Farbe wurde auf der in Beispiel 3 angegebenen Papierstreichanlage gestrichen. Trotz deutlicher Verminderung der Papierbahngeschwindigkeit auf 350 m/min wurden feuchte Papiere erhalten, die auf der Rolle zusammenklebten und somit nicht verwendbar waren. Das Auftragsgewicht betrug 5,5 g/m$^2$.

**Patentansprüche**

1. Mikrokapseln und Abstandshalter enthaltende Druck- und Streichfarben, dadurch gekennzeichnet, daß diese als Abstandshalter kugelförmige harte mono- oder polydisperse Teilchen enthalten, die aus Melamin-Formaldehyd-Kondensationsprodukten bestehen und die Teilchengrößen von 2 bis 50 µm aufweisen.

2. Druck- und Streichfarben gemäß Anspruch 1, dadurch gekennzeichnet, daß die kugelförmigen Teilchen Teilchengrößen von 3 bis 25 µ aufweisen.

3. Druck- und Streichfarben gemäß Anspruch 1 oder 2, dadurch gekennzeichnet, daß die kugelförmigen Teilchen einen mittleren Durchmesser aufweisen, der das 1- bis 5-fache des mittleren Durchmessers der Mikrokapseln ist.

4. Druck- und Streichfarben gemäß Anspruch 1, 2 oder 3, dadurch gekennzeichnet, daß die kugelförmigen Teilchen einen mittleren Durchmesser aufweisen, der das 1- bis 3-fache des mittleren Durchmessers der Mikrokapseln ist.

5. Druck- und Streichfarben gemäß Anspruch 1 bis 4, dadurch gekennzeichnet, daß das Gewichtsverhältnis der kugelförmigen harten mono- oder polydispersen Teilchen bezogen auf trockene Mikrokapseln 10 bis 80 Gew. % beträgt.

6. Druck- und Streichfarben gemäß Anspruch 1 bis 4, dadurch gekennzeichnet, daß das Gewichtsverhältnis der kugelförmigen harten mono- oder polydispersen Teilchen bezogen auf trockene Mikrokapseln 10 bis 40 Gew. % beträgt.

7. Verwendung kugelförmiger harter Teilchen aus Melamin-Formaldehyd-Kondensationsprodukten mit Teilchengrößen von 2 bis 50 µm als Abstandshalter in Mikrokapseln enthaltenden Druck- und Streichfarben.

8. Verwendung nach Anspruch 7, dadurch gekennzeichnet, daß zusätzlich Stärke und/oder Cellulosemehl als Abstandshalter verwendet werden.

**Claims**

1. Printing inks and coating paints containing microcapsules and spacers, characterised in that they contain as spacers hard spherical mono- or poly-disperse particles that consist of melamine/formaldehyde condensates and have particle sizes of from 2 to 50 µm.

2. Printing inks and coating paints according to claim 1, characterised in that the spherical particles have particle sizes of from 3 to 25 µm.

3. Printing inks and coating paints according to claim 1 or 2, characterised in that the spherical particles have an average diameter that is from 1 to 5 times the average diameter of the microcapsules.

4. Printing inks and coating paints according to claim 1, 2 or 3, characterised in that the spherical particles have an average diameter that is from 1 to 3 times the average diameter of the microcapsules.

5. Printing inks and coating paints according to claims 1 to 4, characterised in that the ratio by weight of the hard spherical mono- or poly-disperse particles, based on dry microcapsules, is from 10 to 80 % by weight.

6. Printing inks and coating paints according to claims 1 to 4, characterised in that the ratio by weight of the hard spherical mono- or poly-disperse particles, based on dry microcapsules, is from 10 to 40 % by weight.

7. Use of hard spherical particles consisting of melamine/formaldehyde condensates and having particle sizes of from 2 to 50 µm as spacers in printing inks and coating paints containing microcapsules.

8. Use according to claim 7, characterised in that, in addition, starch and/or cellulose powder is-(are) used as spacer(s).

**Revendications**

1. Encres d'imprimerie et encres à enduire contenant des microcapsules et des éléments d'espacement, caractérisées en ce qu'elles contiennent, comme éléments d'espacement, des particules sphériques dures mono- ou polydispersées, qui sont formées de produits de condensation de mélamine-formaldéhyde et ont une grosseur de particules valant de 2 à 50 µm.

2. Encres d'imprimerie et encres à enduire selon la revendication 1, caractérisées en ce que les particules sphériques ont une grosseur valant de 3 à 25 μm.

3. Encres d'imprimerie et encres à enduire selon la revendication 1 ou 2, caractérisées en ce que les particules sphériques ont un diamètre moyen qui vaut de 1 à 5 fois le diamètre moyen des microcapsules.

4. Encres d'imprimerie et encres à enduire selon la revendication 1, 2 ou 3, caractérisées en ce que les particules sphériques ont un diamètre moyen qui vaut de 1 à 3 fois le diamètre moyen des microcapsules.

5. Encres d'imprimerie et encres à enduire selon l'une des revendications 1 à 4, caractérisées en ce que le rapport pondéral des particules sphériques dures mono- ou polydispersées rapportées à des microcapsules sèches vaut de 10 à 80 % en poids.

6. Encres d'imprimerie et encres à enduire selon l'une des revendications 1 à 4, caractérisées en ce que le rapport pondéral des particules sphériques dures mono- ou polydispersées rapportées à des microcapsules sèches vaut de 10 à 40 % en poids.

7. Utilisation de particules sphériques dures à base de produits de condensation de mélamine-formaldéhyde, ayant une grosseur de particules de 2 à 50 μm, comme éléments d'espacement dans des encres d'imprimerie et dans des encres à enduire contenant des microcapsules.

8. Utilisation selon la revendication 7, caractérisée en ce qu'on utilise, en outre, comme éléments d'espacement, de l'amidon et/ou de la poudre de cellulose.